# EUROPÄISCHE PATENTANMELDUNG

(11) **EP 3 450 054 A1**
(43) Veröffentlichungstag der Anmeldung: **06.03.2019**
(21) Anmeldenummer: 17020499.4
(22) Anmeldetag: 26.10.2017
(51) Int. Cl.: B22F 3/105, B33Y 50/02, B33Y 40/00

(54) **MODULARES LAGERSYSTEM**

(30) Priorität: 05.09.2017 DE 102017008333
(71) Anmelder: Linde Aktiengesellschaft, 80331 München (DE)
(72) Erfinder: SCHOLZ, Jürgen, 81379 München (DE); FORET, Pierre, 80796 München (DE)

(57) **Zusammenfassung**

Die Erfindung betrifft ein modulares Lagersystem (1), umfassend eine Kontrolleinrichtung (10), wenigstens eine Lagereinheit (21, 22, 23) mit einem Anschluss für einen Gasvorrat (40), eine Ventilanordnung (MFC) zum Steuern eines Gasaustausches zwischen der wenigstens einen Lagereinheit (21, 22, 23) und dem Gasvorrat; und wenigstens einen Sensor für wenigstens einen Luftbestandteil, wobei die Kontrolleinrichtung (10) mit der wenigstens einen Lagereinheit (21, 22, 23) elektronisch verbindbar und dazu eingerichtet ist, wenn sie mit der wenigstens einen Lagereinheit (21, 22, 23) elektronisch verbunden ist, einen Wert des wenigstens einen Sensors für wenigstens einen Luftbestandteil zu erfassen und die Ventilanordnung (MFC) so anzusteuern, dass bei einer Verbindung der wenigstens einen Lagereinheit (21, 22, 23) mit dem Gasvorrat ein Gasaustausch durchgeführt wird, bis ein gewünschter Schwellwert für den wenigstens einen Luftbestandteil unterschritten wird.

## Beschreibung

Die Erfindung betrifft ein modulares Lagersystem.

Für die pulverbasierte additive Fertigung werden Metallpulver benötigt. Diese benötigen in der Regel eine besondere Schutzatmosphäre zur Lagerung. In der Regel entsprechen die Anlieferbehältnisse der Lieferanten den Anforderungen bezüglich Feuchtigkeits- und Sauerstoffdichtheit. Restpulver nach einer Fertigung wird nach dem Sieben auf die unterschiedlichsten Arten und Weisen in mehr oder weniger geeigneten Behältnissen gelagert. Häufig werden heute mehr oder weniger aufwendige Inertgasschränke oder technisch identische Individuallösungen genutzt.

Da häufig mehrere verschiedene Lagergüter gelagert werden müssen, gibt es einen Überwachungsbedarf. Da in der Regel bei bekannten Systemen jede Lagereinheit ihr eigenes Kontrollsystem hat, ist es leicht, den Überblick zu verlieren. Außerdem ist nicht immer sofort erkennbar, ob eine Lagereinheit geöffnet wurde, so dass nicht mehr sichergestellt ist, dass sich das Lagergut noch in einer inerten und trockenen Atmosphäre befindet.

Demzufolge ist es Aufgabe der vorliegenden Erfindung, eine Überwachung eines Lagersystems zu vereinfachen.

### Offenbarung der Erfindung

Die Erfindung schlägt ein modulares Lagersystem mit den Merkmalen des Patentanspruchs 1 vor. Vorteilhafte Ausgestaltungen ergeben sich aus den jeweiligen Unteransprüchen und der nachfolgenden Beschreibung.

Erfindungsgemäß umfasst ein modulares Lagersystem eine Kontrolleinrichtung, wenigstens eine Lagereinheit mit einem Anschluss für einen Gasvorrat, eine Ventilanordnung, insbesondere in Form eines Massflussreglers, zum Steuern eines Gasaustausches zwischen der wenigstens einen Lagereinheit und dem Gasvorrat, und wenigstens einen Sensor für wenigstens einen Luftbestandteil. Dabei ist die Kontrolleinrichtung mit der wenigstens einen Lagereinheit elektronisch verbindbar und dazu eingerichtet, wenn sie mit der wenigstens einen Lagereinheit elektronisch verbunden ist, einen Wert des wenigstens einen Sensors für wenigstens einen Luftbestandteil zu erfassen und die Ventilanordnung derart anzusteuern, dass bei einer Verbindung der Lagereinheit mit dem Gasvorrat ein Gasaustausch durchgeführt wird, bis ein gewünschter Schwellwert für den wenigstens einen Luftbestandteil unterschritten wird. Ein Gasvorrat kann Teil des Lagersystems sein.

Dadurch, dass das modulare Lagersystem eine zentrale Kontrolleinrichtung aufweist, die mit wenigstens einer Lagereinheit, bevorzugt mehreren Lagereinheiten elektronisch verbindbar ist, ist eine zentrale Überwachung mehrerer Lagereinheiten möglich. Bevorzugt sind die Kontrolleinrichtung und die wenigstens eine Lagereinheit räumlich getrennt ausgebildet. Dadurch kann die wenigstens eine Lagereinheit auch vorteilhaft separat platziert werden.

Zweckmäßigerweise kann die elektrische Verbindung zwischen der wenigstens einen Lagereinheit und der Kontrolleinrichtung auch getrennt werden. Dadurch ist eine mobile Nutzung der Lagereinheit vorteilhaft möglich.

In einer vorteilhaften Ausführungsform ist die Kontrolleinrichtung mit der wenigstens einen Lagereinheit kabellos elektronisch verbindbar. Dies ist vorteilhaft, da auf diese Weise eine elektrische Steuerung der wenigstens einen Lagereinheit durch die Kontrolleinrichtung kabellos möglich ist.

In einer anderen vorteilhaften Ausführungsform ist die Kontrolleinrichtung mit der wenigstens einen Lagereinheit über eine Kabelkupplung elektronisch verbindbar. Dies ist vorteilhaft, da eine Kabelkupplung ein schnelles Trennen und Lösen ermöglicht, so dass einer separaten räumlichen Nutzung der wenigstens einen Lagereinheit nichts im Wege steht. Auch sind Kabelverbindungen meist zuverlässiger als kabellose Verbindungen.

Bevorzugt umfasst das Lagersystem mehrere Lagereinheiten, bevorzugt zwei bis zehn, ganz besonders bevorzugt drei bis fünf. Auf diese Weise können mehrere Lagereinheiten vorteilhaft zentral verwaltet und überwacht werden. Zweckmäßigerweise ist der wenigstens eine Sensor für wenigstens einen Luftbestandteil (wie z.B. Sauerstoff, Luftfeuchte bzw. Wasser usw.) in oder an der wenigstens einen Lagereinheit angeordnet. Dies ist vorteilhaft, da auf diese Weise keine extra Verbindung des wenigstens einen Sensors mit der wenigstens einen Lagereinheit hergestellt werden braucht, da dieser direkt an der Lagereinheit vorhanden ist, von der der wenigstens eine Luftbestandteil zu ermitteln sind.

In einer weiteren vorteilhaften Ausführungsform ist der wenigstens eine oder wenigstens ein weiterer Sensor für wenigstens einen Luftbestandteil an der Kontrolleinrichtung angeordnet. Auf diese Weise muss keine weit reichende Datenverbindung von der Kontrolleinrichtung zu dem Sensor für wenigstens einen Luftbestandteil etabliert werden. Es ist jedoch in diesem Fall zweckmäßig, wenn es eine Gasverbindung von der wenigstens einen Lagereinheit zu dem Sensor an der Kontrolleinrichtung gibt, bevorzugt unter Verwendung von selbstdichtenden Kupplungen.

Bevorzugt ist die wenigstens eine Lagereinheit mit dem Gasvorrat unter Verwendung wenigstens einer selbstdichtenden Kupplung verbindbar. Dies ist vorteilhaft, da auf diese Weise eine Verbindung problemlos herstellbar und lösbar ist. Auf diese Weise kann ein Schutzgas vorteilhaft von dem Gasvorrat zur wenigstens einen Lagereinrichtung transportiert werden.

In einer weiteren vorteilhaften Ausführungsform ist die wenigstens eine Lagereinheit mit dem wenigstens einen Sensor für wenigstens einen Luftbestandteil über eine selbstdichtende Kupplung verbindbar. Auf diese Weise ist auch eine Verbindung zum wenigstens einen Sensor problemlos herstellbar, selbst wenn der wenigstens eine Sensor nicht direkt an der wenigstens einen Lagereinheit angeordnet ist.

Zweckmäßigerweise ist der wenigstens eine Sensor für wenigstens einen Luftbestandteil als Sauerstoffsensor und/oder Feuchtigkeitssensor ausgebildet. Dies ist vorteilhaft, da ein Sauerstoffgehalt und/oder ein Feuchtigkeitsgehalt Werte sind, die bei diversen Lagergütern niedrig gehalten werden müssen.

In einer weiteren vorteilhaften Ausführungsform ist die wenigstens eine Lagereinheit mit einem Transponder, insbesondere RFID-Chip, versehen. Auf diese Weise kann die Kontrolleinrichtung auf dem Transponder Lagerbedingungen und/oder Lagergüter betreffende Daten, wie gelagertes Material, Höchst-Lagerdauer, gewünschte Lagerbedingungen usw. hinterlegen.

Zweckmäßigerweise ist die wenigstens eine Lagereinheit mobil ausgebildet und/oder von der Kontrolleinrichtung loslösbar. Auf diese Weise lassen sich vorteilhaft beliebig viele Lagereinheiten mit der Kontrolleinrichtung verbinden und von dieser wieder lösen. Insbesondere ist die wenigstens eine Lagereinheit (insbesondere an allen Öffnung, wie ihrem Anschluss für den Gasvorrat) dicht (dem technischen Einsatzgebiet entsprechend) verschließbar.

In einer weiteren vorteilhaften Ausführungsform ist die wenigstens eine Lagereinheit genügend dicht, um eine Atmosphäre für einen vorgegebenen Zeitraum zu halten, wenn sie von der Kontrolleinrichtung losgelöst ist. Insbesondere ist sie gasdicht mit einer Leckagerate von nicht mehr als 10⁻⁶ mbar l/s, bevorzugt von nicht mehr als 10⁻⁷ mbar l/s. Dies ist vorteilhaft, da die Lagereinheit auf diese Weise auch losgelöst von der Kontrolleinrichtung betrieben werden kann.

Bevorzugt ist die wenigstens eine Lagereinheit als explosionsgeschütztes Behältnis ausgebildet. Auf diese Weise ist ein zu lagernder Inhalt auch bei externen Unfällen geschützt. Dies ist vor allem vorteilhaft, wenn der zu lagernde Inhalt ein hoch reaktives Metallpulver ist.

In einer weiteren vorteilhaften Ausführungsform umfasst das modulare Lagersystem zusätzlich wenigstens einen Temperatursensor. Dies ist vorteilhaft, da neben einem Luftbestandteil auch die Temperatur eine sensible Größe für manche Lagergüter darstellt.

Zweckmäßigerweise ist die wenigstens eine Lagereinheit heizbar und/oder kühlbar. Auf diese Weise lassen sich auch die Temperatur der Lagereinheit und damit eine Temperaturumgebung des Lagergutes vorteilhaft steuern. Der Heizmechanismus und/oder Kühlmechanismus wird vorteilhaft von der Kontrolleinrichtung gesteuert.

Gemäß einem weiteren Aspekt der Erfindung wird eine Verwendung eines modularen Lagersystems wie oben beschrieben zur Lagerung eines Metallpulvers vorgeschlagen. Insbesondere hochreaktive Metallpulver benötigen eine Schutzatmosphäre zur Lagerung, so dass sich insbesondere für diese das erfindungsgemäße modulare Lagersystem besonders eignet.

Weitere Vorteile und Ausgestaltungen der Erfindung ergeben sich aus der Beschreibung und den beiliegenden Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand einiger Ausführungsbeispiele in den Zeichnungen schematisch dargestellt und wird im Folgenden unter Bezugnahme auf die Zeichnungen beschrieben.

### Kurze Beschreibung der Zeichnungen

Fig. 1 zeigt schematisch eine erste Ausführungsform eines erfindungsgemäßen modularen Lagersystems;
Fig. 2 zeigt schematisch eine zweite Ausführungsform eines erfindungsgemäßen modularen Lagersystems;
Fig. 3 zeigt schematisch eine dritte Ausführungsform eines erfindungsgemäßen modularen Lagersystems;

### Ausführliche Figurenbeschreibung

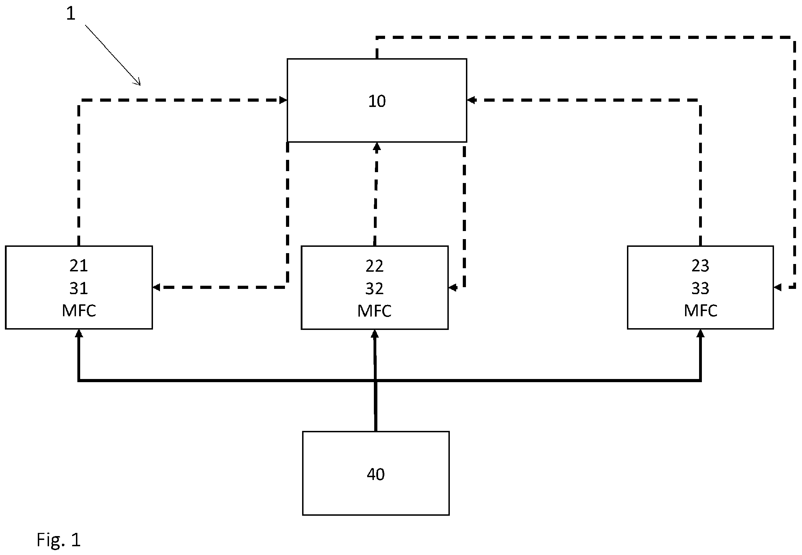

In Figur 1 ist schematisch eine erste Ausführungsform eines erfindungsgemäßen modularen Lagersystems dargestellt und mit 1 bezeichnet.

Das modulare Lagersystem 1 umfasst eine Kontrolleinrichtung 10, drei Lagereinheiten 21, 22, 23 und drei Sensoren 31, 32, 33, die jeweils als Sensoren für wenigstens einen Luftbestandteil, insbesondere als Sauerstoffsensor und/oder Feuchtigkeitssensor ausgebildet sein können. Die Lagereinheiten 21, 22, 23 weisen jeweils z.B. durch selbstdichtende Kupplungen verschließbare Anschlüsse für einen Gasvorrat 40 auf, der ebenfalls in der Abbildung gezeigt ist. Weiterhin weist jede Lagereinheit hinter dem Anschluss als Ventilanordnung zum Steuern eines Gasaustausches zwischen der Lagereinheit und dem Gasvorrat einen Massendurchflussregler (mass flow controller, MFC) auf, mit dem ein Massenstrom des Gases auf einen Sollwert gestellt oder geregelt werden kann. Die durchgezogenen Pfeile zeigen Gasverbindungen an.

In dieser Ausführungsform ist jeweils ein Sensor 31, 32, 33 an jeweils einer Lagereinheit 21, 22, 23 angeordnet. Dies ist nicht beschränkend zu verstehen. So wird später noch eine alternative Anordnung der Sensoren beschrieben. Dadurch, dass die Sensoren 31, 32, 33 direkt an den Lagereinheiten 21, 22, 23 angeordnet sind, können sie direkt einen Messwert erfassen, ohne dass es einer gesonderten Gasverbindung bedarf.

Es ist vorteilhaft, die Lagereinheiten auch mit jeweils einem Transponder, insbesondere RFID-Chip, auszurüsten. Auf diese Weise kann die Kontrolleinrichtung auf dem Transponder Lagerbedingungen und/oder Lagergüter betreffende Daten, wie gelagertes Material, Höchst-Lagerdauer, gewünschte Lagerbedingungen usw. hinterlegen.

Die Kontrolleinrichtung 10 ist mit der wenigstens einen Lagereinheit elektronisch verbunden. Diese Verbindung kann per Kabel mit einer Schnellkupplung hergestellt werden oder auch drahtlos. Die gestrichelten Pfeile zeigen Datenverbindungen an. So können die gestrichelten Pfeile von den drei Sensoren 31, 32, 33 zu der Kontrolleinrichtung 10 einen Strom von Messwerten anzeigen.

Die Kontrolleinrichtung 10 ist dazu eingerichtet, wenn sie mit den Lagereinheiten 21, 22, 23 verbunden ist, jeweils einen Wert der jeweiligen Sensoren 31, 32, 33 zu erfassen. Die gestrichelten Pfeile von der Kontrolleinrichtung 10 zu den Lagereinheiten 21, 22, 23 können Steuerbefehle anzeigen. So ist die Kontrolleinrichtung 10 dazu eingerichtet, wenn sie mit den Lagereinheiten 21, 22, 23 elektronisch verbunden ist, die Lagereinheiten 21, 22, 23 bei Bedarf mit dem Gasvorrat 40 zu verbinden. Diese Verbindung wird bevorzugt mittels des Massendurchflussreglers MFC gesteuert. Die Kontrolleinrichtung 10 sendet dazu entsprechende Steuersignale an die jeweiligen Lagereinheiten bzw. die Massendurchflussregler.

Bevorzugt wird ein Schutzgas von dem Gasvorrat 40 zu den Lagereinheiten 21, 22, 23 geführt. Dabei kann der Gasvorrat 40 mehrere Gasarten umfassen und die Kontrolleinrichtung kann die Lagereinheiten 21, 22, 23 ansteuern und bestimmen, welche Gasart an welche Lagereinheit 21, 22, 23 geführt wird. So kann an jede Lagereinheit 21, 22, 23 eine andere Gasart geführt werden oder es können mehrere Gasarten an eine Lagereinheit 21, 22, 23 geführt werden. Der gesamte Prozess der Gaszufuhr wird von der Kontrolleinrichtung 10 gesteuert, die die Massendurchflussregler MFC.

Vorteilhaft wird ein Gasaustausch durchgeführt, bis ein gewünschter Schwellwert für einen Sauerstoffgehalt und/oder einen Feuchtigkeitsgehalt und/oder einen anderen Wert für wenigstens einen Luftbestandteil unterschritten wird. Dieser Schwellwert kann für jede Lagereinheit 21, 22, 23 ein unterschiedlicher sein und wird bevorzugt von der Kontrolleinrichtung 10 vorgegeben.

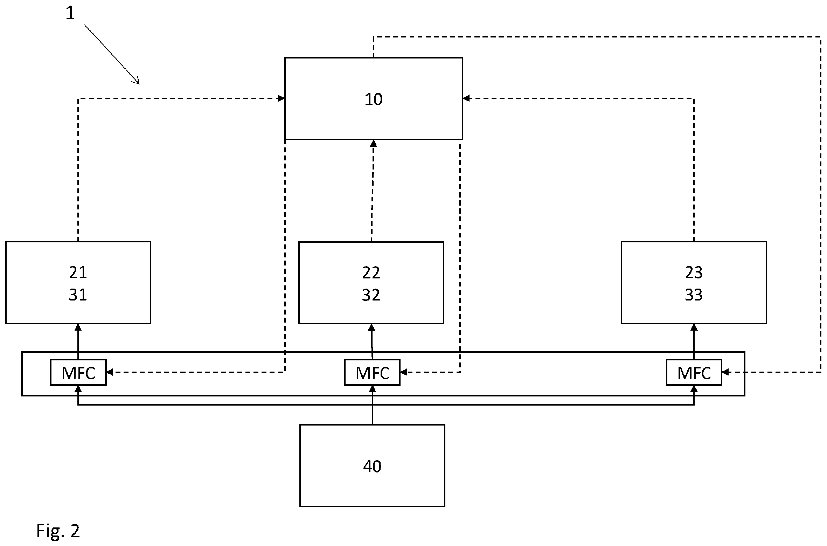

In Figur 2 ist schematisch eine zweite Ausführungsform eines erfindungsgemäßen modularen Lagersystems 1 dargestellt. Figur 2 zeigt ebenfalls eine Kontrolleinrichtung 10, drei Lagereinheiten 21, 22, 23 mit Sensoren 31, 32, 33 und einen Gasvorrat 40. Der Unterschied zu Figur 1 ist, dass die Massendurchflussregler MFC zwischen dem Gasvorrat 40 und den Lagereinheiten 31, 32, 33 außerhalb der Lagereinheiten 31, 32,33 angeordnet sind. Zwischen den Massendurchflussregler MFC und den Lagereinheiten 31, 32, 33 existiert eine Gasverbindung, vorzugsweise mit selbstdichtenden Kupplungen an beiden Seiten. Zwischen den Massendurchflussregler MFC und dem Gasvorrat 40 existiert vorteilhaft eine Gasverbindung ebenfalls mit selbstdichtenden Kupplungen an beiden Seiten.

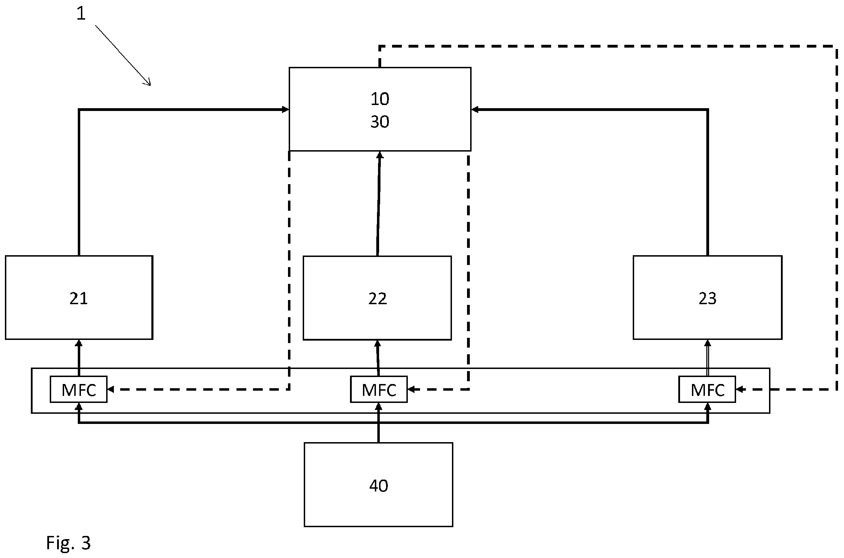

Figur 3 zeigt schematisch eine dritte Ausführungsform eines erfindungsgemäßen modularen Lagersystems 1. Figur 3 zeigt ebenfalls eine Kontrolleinrichtung 10, drei Lagereinheiten 21, 22, 23 und einen Gasvorrat 40. Der Unterschied zu Figur 1 und Figur 2 ist, dass es nur einen Sensor 30 gibt, der als Sensor für wenigstens einen Luftbestandteil, insbesondere als Sauerstoffsensor und/oder Feuchtigkeitssensor ausgebildet sein kann. Dieser Sensor 30 ist an der Kontrolleinrichtung 10 angeordnet.

Dementsprechend existiert jeweils eine Gasverbindung, vorzugsweise mit selbstdichtender Kupplung, von den Lagereinheiten 21, 22, 23 zu der Kontrolleinrichtung 10. Diese Verbindung ist lösbar.

Die durchgezogenen Pfeile von den Lagereinheiten 21, 22, 23 zu der Kontrolleinrichtung zeigen je eine Gasverbindung an, die einen Gasfluss von den Lagereinheiten 21, 22, 23 zu dem Sensor 30 an der Kontrolleinrichtung 10 ermöglicht.

Bevorzugt werden die Verbindungen der Lagereinheiten 21, 22, 23 nacheinander geöffnet und einzeln gemessen. Wenn die Messleitung von Lagereinheit 21 zur Kontrolleinrichtung 10 geöffnet ist, sind die Messleitungen von Lagereinheit 22 und 23 zur Kontrolleinrichtung 10 geschlossen.

Die Anordnung und Ansteuerung der Massendurchflussregler MFC entspricht der aus Figur 2.

Im Unterschied zu Figur 1 und 2 fehlen die Datenverbindungen von den Lagereinheiten 21, 22, 23 zu der Kontrolleinrichtung, da kein Datenstrom von den Lagereinheiten 21, 22, 23 zu der Kontrolleinrichtung 10 notwendig ist, da die Messdaten direkt an der Kontrolleinrichtung 10 erfasst werden können.

## Patentansprüche

1. Modulares Lagersystem (1), umfassend:
eine Kontrolleinrichtung (10),
wenigstens eine Lagereinheit (21, 22, 23) mit einem Anschluss für einen Gasvorrat (40);
eine Ventilanordnung (MFC) zum Steuern eines Gasaustausches zwischen der wenigstens einen Lagereinheit (21, 22, 23) und dem Gasvorrat; und
wenigstens einen Sensor für wenigstens einen Luftbestandteil;
wobei die Kontrolleinrichtung (10) mit der wenigstens einen Lagereinheit (21, 22, 23) elektronisch verbindbar und dazu eingerichtet ist, wenn sie mit der wenigstens einen Lagereinheit (21, 22, 23) elektronisch verbunden ist, einen Wert des wenigstens einen Sensors für wenigstens einen Luftbestandteil zu erfassen und die Ventilanordnung (MFC) so anzusteuern, dass bei einer Verbindung der wenigstens einen Lagereinheit (21, 22, 23) mit dem Gasvorrat ein Gasaustausch durchgeführt wird, bis ein gewünschter Schwellwert für den wenigstens einen Luftbestandteil unterschritten wird.

2. Modulares Lagersystem (1) nach Anspruch 1, wobei die Kontrolleinrichtung (10) mit der wenigstens einen Lagereinheit (21, 22, 23) kabellos oder über eine Kabelkupplung elektronisch verbindbar ist.

3. Modulares Lagersystem (1) nach einem der vorstehenden Ansprüche, wobei die wenigstens eine Lagereinheit (21, 22, 23) mehrere Lagereinheiten (21, 22, 23) umfasst, bevorzugt zwei bis zehn, ganz besonders bevorzugt drei bis fünf.

4. Modulares Lagersystem (1) nach einem der vorstehenden Ansprüche, wobei der wenigstens eine Sensor für wenigstens einen Luftbestandteil in oder an der wenigstens einen Lagereinheit (21, 22, 23) angeordnet ist.

5. Modulares Lagersystem (1) nach einem der vorstehenden Ansprüche, wobei der wenigstens eine Sensor für wenigstens einen Luftbestandteil an der Kontrolleinrichtung (10) angeordnet ist.

6. Modulares Lagersystem (1) nach Anspruch 5, wobei die wenigstens eine Lagereinheit (21, 22, 23) mit dem wenigstens einen Sensor für wenigstens einen Luftbestandteil über eine selbstdichtende Kupplung verbindbar ist.

7. Modulares Lagersystem (1) nach einem der vorstehenden Ansprüche, wobei die wenigstens eine Lagereinheit (21, 22, 23) mit dem Gasvorrat (40) über wenigstens eine selbstdichtende Kupplung verbindbar ist.

8. Modulares Lagersystem (1) nach einem der vorstehenden Ansprüche, wobei der wenigstens eine Sensor für wenigstens einen Luftbestandteil als Sauerstoffsensor und/oder Feuchtigkeitssensor ausgebildet ist.

9. Modulares Lagersystem (1) nach einem der vorstehenden Ansprüche, wobei die wenigstens eine Lagereinheit (21, 22, 23) mit einem Transponder versehen ist, auf dem Lagerbedingungen und/oder Lagergüter betreffende Daten hinterlegbar sind.

10. Modulares Lagersystem (1) nach einem der vorstehenden Ansprüche, wobei die wenigstens eine Lagereinheit (21, 22, 23) mobil ausgebildet und/oder von der Kontrolleinrichtung lösbar ist.

11. Modulares Lagersystem (1) nach Anspruch 10, wobei die wenigstens eine Lagereinheit (21, 22, 23) genügend gasdicht ist, um eine Atmosphäre für einen vorgegebenen Zeitraum zu halten, wenn sie von der Kontrolleinrichtung (10) losgelöst ist, bevorzugt für bis zu zwei Stunden.

12. Modulares Lagersystem (1) nach einem der vorstehenden Ansprüche, wobei die wenigstens eine Lagereinheit (21, 22, 23) als explosionsgeschütztes Behältnis ausgebildet ist.

13. Modulares Lagersystem (1) nach einem der vorstehenden Ansprüche, das zusätzlich wenigstens einen Temperatursensor umfasst.

14. Modulares Lagersystem (1) nach einem der vorstehenden Ansprüche, wobei die wenigstens eine Lagereinheit (21, 22, 23) heizbar und/oder kühlbar ist.

15. Verwendung eines modularen Lagersystems (1) nach einem der Ansprüche 1-14 zur Lagerung eines Metallpulvers.
